# EUROPÄISCHE PATENTSCHRIFT

(11) **EP 2 895 312 B1**
(45) Veröffentlichungstag und Bekanntmachung des Hinweises auf die Patenterteilung: **30.06.2021**
(21) Anmeldenummer: 13773634.4
(22) Anmeldetag: 11.09.2013
(51) Int. Cl.: B29C 48/90, B29C 48/88, B29C 48/12, B29C 48/92, B29C 48/09

(54) **KALIBRIERUNGSVORRICHTUNG UND -VERFAHREN FÜR DIE PROFILEXTRUSION**
CALIBRATION DEVICE AND METHOD FOR PROFILE EXTRUSION
DISPOSITIF ET PROCÉDÉ DE CALIBRAGE POUR L'EXTRUSION DE PROFILÉS

(30) Priorität: 13.09.2012 DE 102012216299
(43) Veröffentlichungstag der Anmeldung: 22.07.2015
(73) Patentinhaber: Greiner Tool.Tec GmbH, 4542 Nussbach (AT)
(72) Erfinder: ANDERS, Gerhard, A-4551 Ried (AT); FISCHER, Bernhard, A-4552 Wartberg (AT)
(74) Vertreter: Maikowski & Ninnemann Patentanwälte Partnerschaft mbB
(86) Internationale Anmeldenummer: PCT/EP2013/068770
(87) Internationale Veröffentlichungsnummer: WO 2014/041008

(56) Entgegenhaltungen:
- EP-A1- 0 925 905
- EP-A1- 0 925 905
- EP-A1- 0 925 905
- EP-A2- 1 363 762
- EP-A2- 1 363 762
- WO-A1-97/27991
- WO-A1-97/27991
- WO-A1-97/27991
- WO-A1-2004/041512
- WO-A1-2004/041512
- WO-A1-2004/041512
- WO-A2-2006/096898
- AT-B- 411 825
- AT-B- 411 825
- AT-B- 411 825
- DE-A1- 1 966 994
- DE-A1- 1 966 994
- DE-A1- 10 224 461
- DE-A1- 10 224 461
- DE-A1- 10 224 461
- DE-A1- 19 917 837
- DE-B- 1 291 896
- DE-B- 1 291 896
- DE-B- 1 291 896
- GB-A- 2 015 418
- GB-A- 2 015 418
- GB-A- 2 015 418
- JP-A- H02 293 117
- JP-A- H02 293 117
- JP-A- 2010 058 363
- JP-A- 2010 058 363
- US-A- 5 288 218
- US-A- 5 288 218

## Beschreibung

Die Erfindung betrifft eine Kalibriervorrichtung mit den Merkmalen des Anspruchs 1 und ein Kalibrierverfahren mit den Merkmalen des Anspruchs 12.

Profile aus thermoplastischen Kunststoffen (z.B. PVC) werden in der Regel mittels Extrusion hergestellt. Für die Formgebung eines Profils sind eine Düse und eine Kalibriervorrichtung notwendig.

Kalibriervorrichtungen für die Herstellung von Kunststoffprofilen sind beispielsweise in den Dokumenten WO 2004/041512 A1, EP 0 925 905 A1, GB 2 015 418 A, DE 12 91 896 B, WO 2006/096898 A2, DE 199 17 837 A1 und AT 411 825 B beschrieben.

Kalibriervorrichtungen für die Herstellung von Kunststoffprofilen, z.B. Fensterprofilen, weisen üblicherweise eine Trocken- und eine Nasskalibriervorrichtung auf, wobei das heiße Extrudat nach dem Austritt aus der Düse zunächst die Trockenkalibriervorrichtung und anschließend die Nasskalibriervorrichtung durchläuft. Am Ende der Kalibrierung und nach vollständigem Abkühlen des Profils auf Raumtemperatur muss das Profil die gewünschte Kontur aufweisen, d.h. das Profil muss die Nennmaße aufweisen.

Die Nasskalibriervorrichtung weist mehrere hintereinander angeordnete Vakuumtanks auf, in denen die weitgehende Abkühlung des Profils durch direkten Kontakt mit dem Kühlwasser bewirkt wird, nachdem dieses bereits teilweise in der Trockenkalibrierung abgekühlt worden ist. Üblicherweise sind in einem Vakuumtank der Nasskalibriervorrichtung in Abständen von eingangs ca. 100 mm bis ausgangs ca. 500 mm sogenannte Kurzkalibratoren oder Blenden angeordnet, welche jeweils eine Durchgangsöffnung aufweisen, die weitgehend der Geometrie des Profils entspricht.

Die Vakuumtanks sind an sich allseitig geschlossen. Nur an den Stirnseiten sind Blenden mit Öffnungen für den Ein- und Austritt des Profils angeordnet. Die Vakuumtanks werden mit Unterdruck beaufschlagt (Größenordnung ca. 30 bis 100 mbar), wodurch das Profil geringfügig "aufgebläht" wird und sich an die Durchgangsöffnungen der Blenden anlegt. Das Profil kühlt somit in einer definierten Gestalt ab, die Formhaltigkeit wird gewährleistet.

Das Kühlwasser durchfließt die Vakuumtanks ausgehend von wenigen Zuleitungen bis hin zu wenigen Ableitungen.

Der Unterdruck muss nur über einen Unterdruckanschluss aufgebracht werden und wirkt dann jeweils im gesamten Innenraum eines Vakuumtanks. Der Fertigungsaufwand für die Kurzkalibratoren (Blenden) ist vergleichsweise gering, weil diese keine Versorgungs- und Verteilbohrungen für Unterdruck und Kühlwasser benötigen.

Die der Nasskalibrierung vorgeschaltete Trockenkalibrierung weist mindestens eine Trockenkalibriervorrichtung auf, wobei z.B. bis zu acht Trockenkalibriervorrichtungen hintereinander angeordnet sein können.

Die Trockenkalibriervorrichtungen weisen Durchgangsöffnungen mit Laufflächen für einen Kontakt mit dem Extrudat auf, welche etwa der Kontur des Profils entspricht. Es bestehen jedoch im Detail maßliche bzw. geometrische Unterschiede, um der Längenreduzierung mit abnehmender Temperatur des Kunststoffes zu folgen und um den Verzug infolge unterschiedlicher Abkühlgeschwindigkeiten auszugleichen.

Die Trockenkalibriervorrichtungen werden mit Unterdruck und mit Kühlwasser versorgt. Der den Laufflächen anliegende Unterdruck bewirkt, dass das Profil an diese angesaugt wird.

Der Unterdruck wirkt dabei über sogenannte Vakuumschlitze zwischen Profil und Trockenkalibriervorrichtung und sorgt dafür, dass das Profil spielfrei an der Lauffläche anliegt, so dass dieses eine definierte Außenkontur einnimmt. Über Anschluss- und Verteilbohrungen wird innerhalb der Kalibrierung eine Strömungsverbindung zu Vakuumpumpen hergestellt. Außerhalb der Trockenkalibriervorrichtungen erfolgt die Übertragung des Unterdrucks mittels Schläuchen und Anschlussstellen.

Infolge des engen Kontaktes des Profils an der Lauffläche zur Trockenkalibriervorrichtung erfolgt eine Wärmeübertragung vom heißen Profil auf die kalte Trockenkalibriervorrichtung.

Um ein Ansteigen der Temperatur der Trockenkalibriervorrichtungen zu verhindern oder zu minimieren, werden diese gekühlt, meist kontinuierlich. Dies erfolgt, in dem Kühlwasser durch nahe an der Lauffläche liegende Kühlkanäle geleitet wird. Jeder dieser Kühlkanäle benötigt eine Zuleitung und eine Ableitung für das Kühlwasser, wobei jedoch mehrere Kühlkanäle zusammengefasst werden können. Somit sind für jeden Kühlkreis zwei Wasseranschlüsse erforderlich, jeweils für die Zuleitung und für die Ableitung.

Für die Aufrechterhaltung des gewünschten Betriebszustandes der Trockenkalibriervorrichtungen ist zusätzlich zur erforderlichen Mindestanforderung hinsichtlich der Geometrie der Lauffläche ein erheblicher Zusatzaufwand bei der Fertigung erforderlich, um den erforderlichen Unterdruck und die Kühlung gewährleisten und reproduzieren zu können, welcher insbesondere die Herstellung von Verteilbohrungen für den Unterdruck und für die Kühlwasserzu- und - ableitungen betrifft. Jeder Anschluss erfordert entsprechende Koppelstellen (Kupplungen) und Anschlussschläuche, welche beim Wechsel der Kalibrierung in Hinblick auf eine andere Profilgeometrie ab- und angeschlossen werden müssen. Außerdem sind bestimmte Einstellungen hinsichtlich Durchflussmenge oder Höhe des Unterdrucks einzuhalten, wodurch für jeden Anschluss auch entsprechende Hähne vorgesehen werden müssen. Insgesamt ist der Aufwand bei der Herstellung als auch bei der Bedienung der herkömmlichen Trockenkalibrierungen hoch.

Es besteht daher die Aufgabe, eine Kalibriervorrichtung zu schaffen, die einfach aufgebaut ist und ein Kalibrierverfahren zu schaffen, das einfach ausführbar ist.

Die neue Erfindung soll einerseits den Fertigungsaufwand für die Kalibrierung verringern und andererseits die Bedienung der Kalibrierung während der Extrusion erleichtern.

Die Aufgabe wird durch eine Kalibriervorrichtung für die Extrusion von Profilen aus Kunststoff mit den Merkmalen des Anspruchs 1 gelöst.

Dabei werden mindestens zwei Tankkalibratoren mit einer Öffnung und einer Lauffläche für das extrudierte Profil eingesetzt, die in einem Vakuumtank mit Kühlwasser angeordnet sind und über deren äußere Fläche die Wärme des extrudierten Profils mindestens teilweise zum Kühlwasser übertragbar ist.

Dabei steht die Außenseite der mindestens zwei Tankkalibratoren mit Kühlwasser in Berührung, so dass eine Kühlung des extrudierten Profils nicht nur durch den zusätzlich vorhandenen mindestens einen Kühlkanal im Inneren des Tankkalibrators erfolgen muss. Die direkte Abfuhr der Wärme vom Tankkalibrator in das Kühlwasser des Vakuumtanks erlaubt eine platzsparendere Bauweise und einen effizienten Betrieb. Ferner entspricht die axiale Länge des Tankkalibrators mindestens der Höhe und / oder der Breite des Nennmaßes des Profils, das durch den Tankkalibrator geführt wird. Damit ist eine ausreichende Länge, und damit eine ausreichende Wärmeübertragungsfläche sichergestellt.

Die Außenabmessungen des Tankkalibrators können somit kleiner gewählt werden als bei einem Trockenkalibrator, weil weniger Platz für die Unterbringung der Verteilleitungen für den Unterdruck und für das Kühlwasser benötigt wird. Es ist ein zusätzlicher Vorteil, wenn die Außenabmessungen so klein als möglich gewählt werden, weil dann die Wärmeableitung über die Außenflächen an das umgebende Kühlwasser wirksamer wird.

Auf Vakuumschlitze und diverse Versorgungsleitungen für diese kann gänzlich verzichtet werden. Die Tankkalibratoren werden in einem Vakuumtank untergebracht, welcher insgesamt unter Unterdruck versetzt wird.

Dabei ist es besonders vorteilhaft, wenn der mindestens eine Kühlkanal an eine Kühlwasserförderung anschließbar ist oder der Kühlkanal von Kühlwasser passiv durchströmbar ist. Unter einer passiven Durchströmung wird hier verstanden, dass das durchströmende Wasser nicht direkt durch eine externe Pumpe durch den Kühlkanal gefördert wird, sondern dass die vorhandene Strömungsenergie einer stromaufwärts liegenden Vorrichtung, z.B. einem anderen Kühlkanal, ausgenutzt wird, ohne dass neue Energie zugeführt wird.

Der mindestens eine Kühlkanal wird von Wasser durchströmt, das aus einem Kühlkanal einer stromaufwärts oder stromabwärts bezogen auf die Extrusionsrichtung liegenden Vorrichtung stammt.

In einer vorteilhaften Ausführungsform sind Tankkalibratoren über Anschlüsse an den Außenseiten mit Kühlwasser beaufschlagbar, wobei das Kühlwasser aus den nahe der Lauffläche liegenden Kühlkanälen stirnseitig austritt.

Zur Vermeidung von Vakuumverlusten ist es vorteilhaft, wenn am Übergang zwischen einem ersten Tankkalibrator und einem zweiten Trockenkalibrator (stromaufwärts benachbart) mindestens ein Dichtelement angeordnet ist. Dabei ist es vorteilhaft, wenn das mindestens eine Dichtelement als axial wirkende O-Ringdichtung und / oder als Dichtlippe ausgebildet sind. Bei einer stirnseitigen Dichtung durch eine Dichtlippe wird selbsttätig bei Anliegen eines Unterdrucks die Dichtwirkung erhöht.

Zur Verbesserung der Dichtwirkung ist es vorteilhaft, wenn eine axial wirkende Dichtung zwei in Serie wirkende Dichtelemente aufweist und dass der durch die beiden Dichtelemente gebildete Zwischenraum entweder durch Unterdruck oder durch Wasser beaufschlagbar ist.

Zusätzlich oder alternativ kann die Dichtwirkung durch ein Manometer zur Messung des Druckes in einem Zwischenraum zwischen zwei Dichtelementen überwacht werden.

Vorteilhaft ist es auch, wenn der Vakuumtank dichtend ausgeführt ist, um besonders an den dichtenden stirnseitigen Anschlussstellen zum nachfolgenden Vakuumtank und an den davor positionierte Trockenkalibriervorrichtung den Eintritt von Falschluft weitgehend zu unterbinden.

Für einen effizienten Betrieb ist es vorteilhaft, wenn der Unterdruck im Vakuumtank zwischen 0,05 bis 0,8 bar, bevorzugt zwischen 0,1 bis 0,5 bar, einstellbar und/oder regelbar ist.

Die Wasserstandshöhe im Vakuumtank ist so einstellbar und/oder regelbar, dass diese das extrudierte Profil und die Tankkalibratoren überragt.

Für eine effiziente Druckhaltung im Vakuumtank ist es vorteilhaft, wenn eine Wasserabsaugöffnung für das Kühlwasser mit einer Wasserpumpe in Leitungsverbindung steht und dass an der Druckseite der Wasserpumpe ein Rückschlagventil angeordnet ist. Durch das Rückschlagventil wird verhindert, dass Luft von Außen angesaugt wird, wenn ein Vakuum am Vakuumtank angelegt wird.

Dabei ist es besonders vorteilhaft, wenn zwischen einem Lufthohlraum des Vakuumtanks und der Wasserpumpe eine Druckausgleichsleitung angeordnet ist, welche vor dem Wassereinlass oder hinter dem Wasserauslass der Wasserpumpe und vor dem Rückschlagventil einmündet. Damit ist es möglich, Luftblasen, die sich in der Nähe der Wasserpumpe gebildet haben, abzulassen, damit eine einwandfreie Förderleistung der Wasserpumpe gewährleistet ist.

Auch ist es vorteilhaft, wenn die Wasserdurchsatzleistung der Wasserpumpe in Abhängigkeit der Wasserstandshöhe im Vakuumtank regelbar ist.

Für einen leichteren Zugang, z.B. bei der Wartung, ist es vorteilhaft, wenn der Vakuumtank an einer Längsseite oder an beiden Längsseiten mit einer abnehmbaren Seitenwand ausgerüstet ist.

Der Abstand zwischen den mindestens zwei Tankkalibratoren beträgt zwischen 0 und 50 mm, bevorzugt zwischen 0,1 und 5 mm. Bei diesen Abständen ist es möglich, dass durch Kühlkanäle strömendes Kühlwasser in stromabwärts gelegene Kühlkanäle eintritt, d.h. es findet eine passive Durchströmung statt, ohne dass eine neue Energiezufuhr notwendig ist.

Die Tankkalibriervorrichtung ist mit einer Trockenkalibriervorrichtung mit ein bis vier Trockenkalibratoren gekoppelt.

Mit Vorteil beträgt die axiale Länge eines Tankkalibrators mindestens 200 mm, insbesondere 100 mm.

Die Aufgabe wird auch durch ein Kalibrierverfahren mit den Merkmalen des Anspruchs 12 gelöst. Das extrudierte Profil wird dabei zuerst durch eine Trockenkalibriervorrichtung und durch eine Tankkalibriervorrichtung gemäß mindestens einem der Ansprüche 1 bis 11 geführt.

Ausführungsbeispiele der Erfindung werden anhand von Figuren erläutert. Dabei zeigt:
- Fig. 1: eine perspektivische Darstellung einer Trockenkalibrierungsvorrichtung mit nachgeschalteter Tankkalibrierungsvorrichtung;
- Fig. 2: eine Schnittansicht durch die Ausführungsform gemäß Fig. 1;
- Fig. 3: eine Schnittansicht einer Abdichtung an der Einlaufseite zum Vakuumtank für die Tankkalibratoren mit einer O-Ringdichtung;
- Fig. 4: eine Schnittansicht einer Abdichtung an der Einlaufseite zum Vakuumtank für die Tankkalibratoren mit einer Lippendichtung (großer Abstand);
- Fig. 5: eine Schnittansicht einer Abdichtung an der Einlaufseite zum Vakuumtank für die Tankkalibratoren mit einer Lippendichtung (kleiner Abstand);
- Fig. 6: eine perspektivische Darstellung eines Tankkalibrators;
- Fig. 7: eine Ansicht der Stirnfläche des Tankkalibrators gemäß Fig. 6;
- Fig. 8: eine Ansicht der Stirnfläche einer Trockenkalibrierung zum Vergleich mit dem Tankkalibrator der Fig. 7;
- Fig. 9: eine zweite Ausführungsform eines Tankkalibrators;
- Fig. 10: eine dritte Ausführungsform eines Tankkalibrators;
- Fig. 11: eine Ausführungsform einer Kühlwasserabsaugung.

Im Folgenden wird anhand verschiedener Ausführungsformen dargestellt, wie der Einsatz von sogenannten Tankkalibrierungsvorrichtungen 20 zu einer Vereinfachung der Kalibrierungsvorrichtung führen kann.

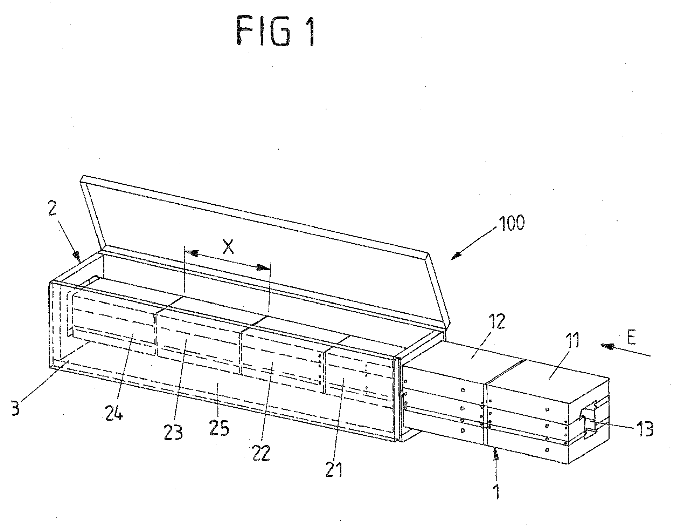

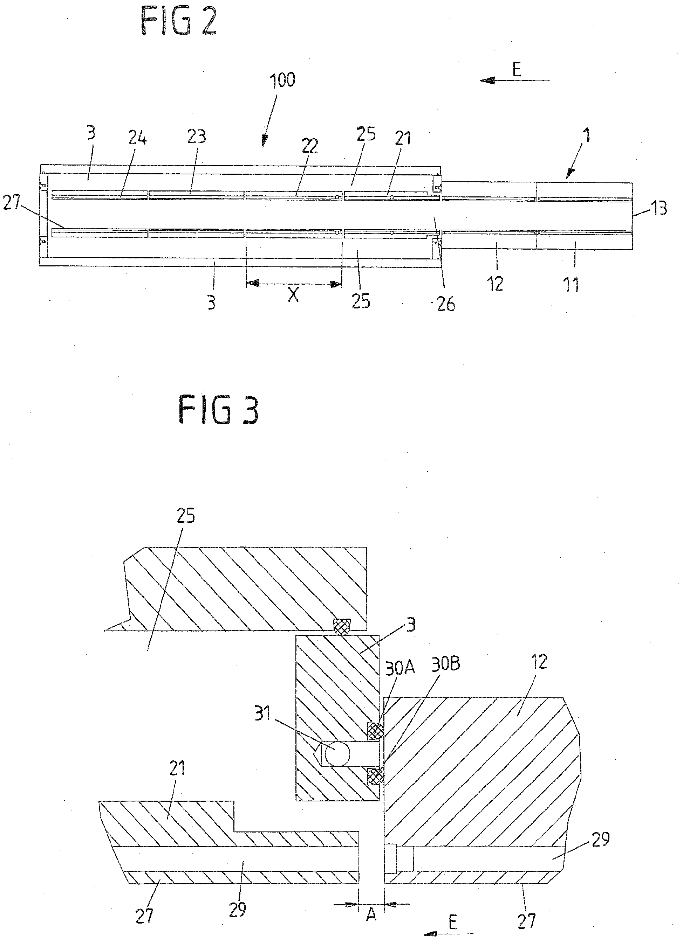

In Fig. 1 ist der einlaufseitige Bereich (Pfeil E gibt die Extrusionsrichtung an) einer Kalibrierungsvorrichtung 100 dargestellt, wobei die Nasskalibrierungsvorrichtung, die daran anschließt, bestehend aus bis zu sechs Vakuumtanks, mit innen angeordneten Blenden, nicht dargestellt ist. In Fig. 2 ist eine Schnittansicht durch die Kalibrierungsvorrichtung 100 dargestellt.

Die hier dargestellte Ausführungsform weist eine Tankkalibriervorrichtung 2 mit vier Tankkalibratoren 21, 22, 23, 24 auf, wobei an der einlaufseitigen Stirnwand eine Abdichtung zur davor angeordneten Trockenkalibrierungsvorrichtung 1 mit zwei Trockenkalibratoren 11, 12 vorgesehen ist.

Die Extrusionsrichtung E verläuft von rechts nach links. Der vorgeformte Schmelzestrang (Extrudat), hier nicht dargestellt, tritt aus einer ebenfalls nicht dargestellten Düse aus und gelangt zunächst in die Trockenkalibrierungsvorrichtung 1. Diese weist in der gezeigten Ausführung zwei einzelne Trockenkalibratoren 11, 12 auf. Jeder Trockenkalibrator 11, 12 weist im Inneren eine Öffnung 13 auf, durch welche das Profil geführt wird. Wenn im Folgenden von Abmessungen des Profils gesprochen wird, so bezieht sich dies auf die Abmessungen der Öffnungen 13, durch die das extrudierte Profil hindurch tritt.

Der Querschnitt dieser Öffnung 13 für das Profil ist geometrisch eng an die gewünschte Profilkontur (d.h. die Nennmaße) angepasst, ändert sich aber in Längsrichtung geringfügig, um den Schrumpf und den Verzug des Profils infolge der Abkühlung auszugleichen.

Das Profil liegt an der Lauffläche der Trockenkalibratoren 11, 12 infolge eines aufgebrachten Unterdrucks an und gibt die Wärme an die Kalibrierung ab.

Wie aus dieser Fig. 1 erkennbar und wie im Folgenden noch erläutert, weist jeder Trockenkalibrator 11, 12 Versorgungsbohrungen für "Kühlwasser Ein", "Kühlwasser Aus" und für Unterdruck auf. Diese Versorgungsbohrungen werden fallweise auch zusammengefasst. Darunter ist zu verstehen, dass ein einmündender Anschluss im Inneren des Trockenkalibrators 11, 12 verzweigt wird, wodurch weniger äußere Anschlüsse beim Wechseln des Profils ab- und anzukuppeln sind. Die Längsbohrungen, welche nahe der Lauffläche angeordnet sind, müssen stirnseitig verschlossen werden, damit das Wasser dort nicht austreten kann und gezwungen wird, systematisch von der Eintrittsöffnung bis zur Austrittsöffnung durch alle Kühlkanäle zu fließen.

Die Kühlkanäle müssen nicht immer in axialer Richtung verlaufen. Je nach den konstruktiven Gegebenheiten können diese auch vertikal oder schräg zur Extrusionsachse verlaufen oder mäanderförmig ausgebildet sein.

Die in Fig. 1 und 2 dargestellte Ausführungsform der Kalibrierungsvorrichtung 100 weist im Anschluss an die Trockenkalibriervorrichtung 1 einen vergleichsweise kurzen Vakuumtank 3 auf, in dem weitere Kalibratoren, die Tankkalibratoren 21, 22, 23, 24 vorgesehen sind.

Diese Tankkalibratoren 21, 22, 23, 24 ähneln bezüglich der Lauffläche und der Wirkung auf das Profil den Trockenkalibratoren 11, 12, sind im Vergleich zu diesen aber billiger zu fertigen, da die Kühlung nicht allein über von Kühlwasser durchströmte Kanäle erfolgt, sondern durch ein Wasserbad 25. Dies wird im Folgenden noch erläutert.

Die Einsparungen betreffen kleinere Außenabmessungen und Querschnittsabmessungen und weniger Versorgungs- bzw. Verteilbohrungen für das Kühlwasser und für das Vakuum.

Um das Profil im Bereich der Hohlkammern zur Anlage an die Lauffläche der Tankkalibratoren 21, 22, 23, 24 zu veranlassen, wird der gesamte Vakuumtank 3 unter einen Unterdruck von ca. 0,1 bis 0,5 bar versetzt.

Die Wärmeabfuhr vom Profil erfolgt über die Außenfläche der Tankkalibratoren 21, 22, 23, 24 in das Kühlwasser im Wasserbad 25, so dass noch vorhandene Kühlkanäle 29, welche nahe an der Lauffläche 27 angeordnet sind, relativ klein ausgebildet sein können.

Diese Kühlkanäle 29 können bei einigen Tankkalibratoren 21, 22, 23, 24 alternativ oder zusätzlich aktiv mit Kühlwasser beaufschlagt werden, indem die Kühlkanäle mit einer Kühlwasserförderung verbunden werden.

Auch ist es möglich, dass die Kühlkanäle 29 alternativ oder zusätzlich passiv durch das ausfließende Kühlwasser aus dem jeweils benachbarten Tankkalibrator 21, 22, 23, 24 mit Kühlwasser versorgt werden. Dabei wird der stromabwärts liegende Kühlkanal 29 von Wasser durchströmt, das von einer stromaufwärts liegenden Vorrichtung, hier einem anderen Tankkalibrator 21, 22, 23, 24, stammt.

Das beaufschlagte Kühlwasser tritt dabei an einer oder an beiden Stirnflächen des stromaufwärts liegenden Tankkalibrators 21, 22, 23, 24 aus, je nach spezieller Ausführung und Anordnung im Vakuumtank 3. Das an einer Stirnfläche aus den axial ausgerichteten Längskanälen austretende Kühlwasser hat einen gewissen Impuls bzw. einen gewissen Schwung, um in die analogen Kühlkanäle eines stromabwärts liegenden, anschließenden Tankkalibrators 21, 22, 23, 24 einzutreten und durch dessen Kühlkanäle zu fließen.

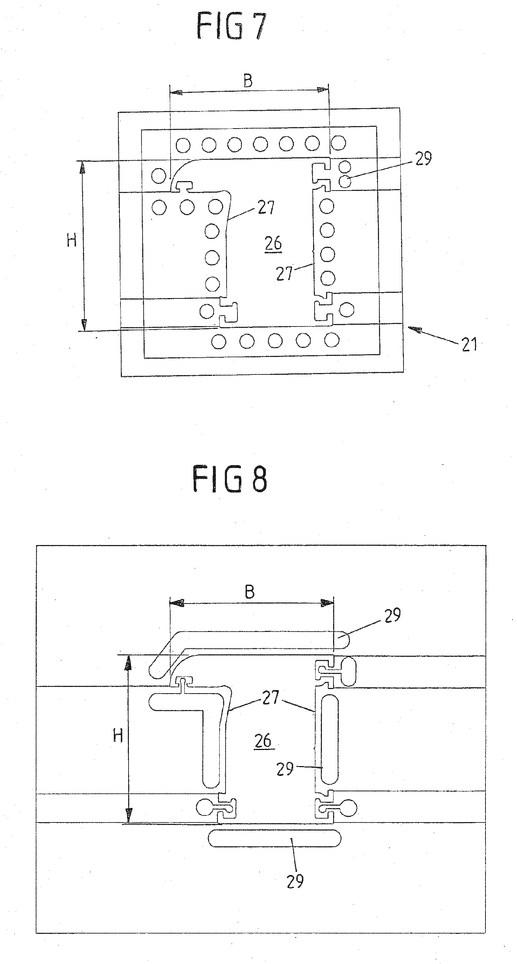

Die axiale Länge X der Tankkalibratoren 21, 22, 23, 24 ist dabei größer als die Höhe H oder die Breite B des Profils (siehe z.B. Fig. 7). Durch diese Wahl der Länge wird eine ausreichend große Wärmeübertragungsfläche bereitgestellt.

Zwischen den Tankkalibratoren 21, 22, 23, 24 in der dargestellten Ausführungsform besteht jeweils nur ein kleiner Abstand, welcher etwa 0,1 bis 5 mm beträgt. Grundsätzlich sind aber Abstände bis 50 mm ebenfalls möglich, auch wenn dabei nur eine geringere Beaufschlagung der benachbarten Tankkalibratoren 21, 22, 23, 24 mit Kühlwasser zu erwarten ist.

Je kleiner der Unterdruck im Vakuumtank 3 gewählt wird, umso größere Abstände können zwischen den Tankkalibratoren 21, 22, 23, 24 verwendet werden. Bei 50 mm Abstand sollte der Unterdruck eher nicht 0,1 bar übersteigen, bei 5 mm Abstand haben Unterdrücke bis 0,5 bar keine negativen Auswirkungen.

Der erlaubte Druck hängt außer vom Abstand vor allem von der Profilkontur ab. Bei ungünstigen Verhältnissen beulen sich ebene Flächen des Profils unzulässig weit nach außen, was naturgemäß vermieden werden soll.

Da die Wärmeabfuhr aus dem Profil mit zunehmender Abkühlung der Außenschicht des Profils massiv abnimmt, wird im Bereich der Tankkalibratoren 21, 22, 23, 24 deutlich weniger Wärme abgeführt als im Bereich der Trockenkalibratoren. Somit ist auch kein sehr hoher Kühlwasserdurchsatz durch die Kühlkanäle erforderlich und eine unzulässige Erwärmung der Tankkalibratoren 21, 22, 23, 24 wird trotzdem unterbunden.

Einlaufseitig sollte der erste Tankkalibrator 21 sehr gut gegenüber der Trockenkalibriervorrichtung 1 und anderen Maschinenteilen abgedichtet werden, damit keine Luft eindringen kann. Eindringende Luft würde sich an der Profiloberfläche anlagern und dann unkontrolliert zwischen Profiloberfläche und Lauffläche des Tankkalibrators 21, 22, 23, 24 eingezogen werden. Diese Luft würde dann zu einer Verschlechterung der Profiloberfläche führen, weil Glanzunterschiede erkennbar wären und Markierungen entstehen. Die Stirnfläche des Vakuumtanks 3 soll daher sehr gut gegenüber der Stirnfläche der Trockenkalibrierung 1 abdichten.

Dies kann z.B. mit einer umlaufenden Dichtung erfolgen, wenn diese ausreichend elastisch verformbar ist, und sich daher sehr gut an kleinere Unebenheiten anpassen kann.

In Fig. 3 ist eine solche Dichtung im Detail einer Schnittansicht dargestellt. Der Ausschnitt zeigt den Übergang von dem letzten Trockenkalibrator 12 zum ersten Tankkalibrator 21. Zwischen dem Trockenkalibrator 12 und dem Tankkalibrator 21 besteht ein Abstand A. Trockenkalibrator 12 und Tankkalibrator 21 sind von Kühlkanälen 29 durchzogen, die jeweils in der Nähe der Laufflächen 27 angeordnet sind.

Es ist vorteilhaft, wenn zwei axiale Dichtelemente 30A, 30B umlaufend vorgesehen werden, wobei der Raum, der von den beiden Dichtelementen 30A, 30B begrenzt wird für eine Überwachung der Wirksamkeit verwendet werden kann. In Fig. 3 ist eine Ausführungsform dargstellt, bei der die Dichtelemente 30A, 30B als axiale O-Ringe an der Stirnseite des Vakuumtanks 3 angeordnet sind. Alternativ oder zusätzlich kann auch eine Abdichtung des Tankkalibrators 21, 22, 23, 24 gegenüber dem Trockenkalibrators 12 vorgesehen sein.

Wird dieser Raum durch die Bohrung 31 mit mindestens dem gleichen Unterdruck beaufschlagt, mit dem der Vakuumtank 3 selbst beaufschlagt wird, so kann keine Luft in den Vakuumtank 3 eingesaugt werden. In diesem Fall kann zwar von außen etwas Luft an dem äußeren Dichtelement 30A vorbei in den Zwischenraum eingesaugt werden, diese wird wie vorgesehen abgesaugt. Nach innen zum Vakuumtank 3 kann diese jedoch nicht vordringen, weil an dem inneren Dichtelement 30B kein Druckgefälle vorliegt.

Zusätzlich kann der Druck im Zwischenraum durch ein Manometer überwacht werden. Solange an diesem Manometer der gleiche Druck ansteht wie im Vakuumtank 3 selbst, solange ist das äußere Dichtelement 30A weitgehend wirksam, so dass kein Druckgefälle am inneren Dichtelement 30B in Richtung des Innenraums des Vakuumtanks 3 auftritt. Selbst beim Feststellen einer kleinen Druckdifferenz zwischen den beiden gemessenen Drücken ist die Gefahr, dass Falschluft in den Tank hineingesaugt wird, noch sehr gering, weil die Dichtwirkung des inneren Dichtelements 30B noch vollständig wirksam ist.

Alternativ kann der Zwischenraum mit Kühlwasser beaufschlagt werden. Hierbei ist nur ein relativ kleiner Durchsatz bzw. ein geringer Überdruck (weniger als 0,5 bar) erforderlich, weil die Dichtwirkung der Dichtelemente 30A, 30B gegenüber Wasser wesentlich wirksamer ist als gegenüber Luft. Bei mäßigen Undichtigkeiten kann nur Wasser in den Vakuumtank eingesaugt werden und keinesfalls Luft. Ein geringer Wasseraustritt nach außen ist ebenfalls nicht störend, weil im Nahbereich der Kalibrierung ohnehin häufig Wasser offen in eine Wasserauffangwanne fließt und abgeleitet wird.

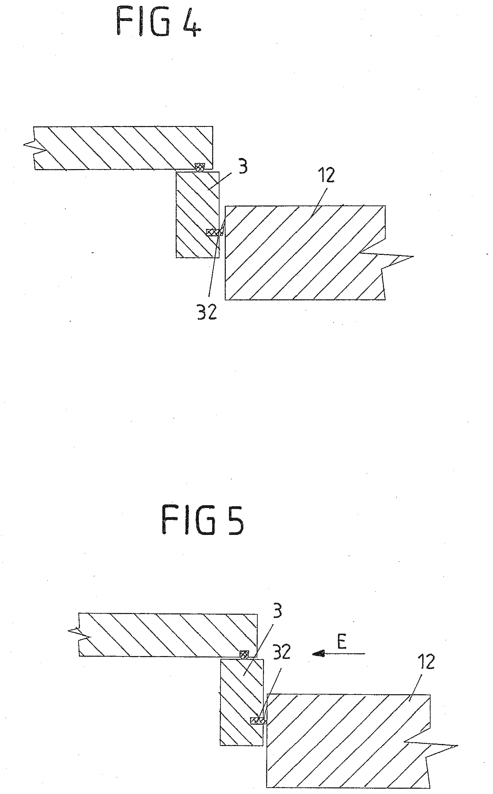

Anstelle einer O-Ringdichtung (oder auch zusätzlich zur O-Ringdichtung) kann auch eine Lippendichtung 32 als Dichtelement verwendet werden, um die gewünschte Dichtwirkung zu erzielen, wie dies in Fig. 4 und 5 dargestellt ist.

In Fig. 4 und 5 und ist der gleiche Ausschnitt der Stirnwand des Vakuumtanks 3 und einem Trockenkalibrator dargestellt wie in Fig. 3. Diese Lippendichtung 32 kann ebenfalls die erforderliche Dichtwirkung erzielen, wie oben mit zwei ringförmigen O-Ringdichtungen 30A, 30B gezeigt. Die Lippendichtung 32 hat den Vorteil, dass der Abstand zwischen den abzudichtenden Stirnwänden größere Unterschiede aufweisen kann und trotzdem eine gute Dichtwirkung erzielt wird. Die in Fig. 4 und 5 dargestellte Dichtlippe 32 wirkt bei Abständen zwischen 1,8 und 3 mm. Der Unterdruck im Vakuumtank 3 bewirkt, dass sich die Dichtlippe 32 selbsttätig an der Stirnfläche festsaugt, sobald nur kurzzeitig ein Kontakt zu dieser hergestellt worden ist.

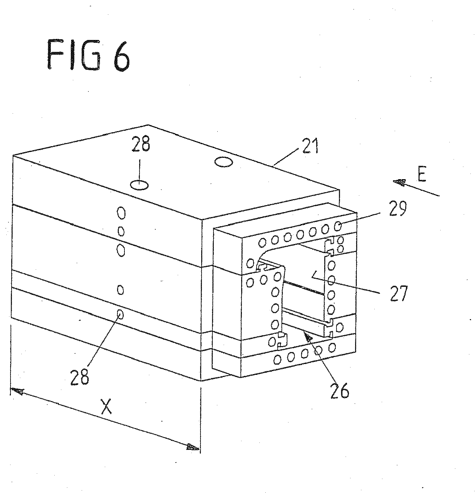

In Fig. 6 ist der erste Tankkalibrator 21 mit einer axialen Länge X in einer perspektivischen Ansicht dargestellt. Die Vorderseite ist die Stirnseite mit der Öffnung 26 für das extrudierte Profil, wobei die Stirnseite im Zusammenbau der gesamten Anlage mit dem Trockenkalibrator 12 (hier nicht dargestellt) zusammenwirkt. Die Öffnung 26 entspricht den geometrischen Abmessungen des Profils, dass hier nicht dargestellt ist.

In Fig. 7 ist die Stirnseite des Tankkalibrators 21 gemäß Fig. 6 dargestellt. In der Ansicht sind die Kühlkanäle 29 parallel zu den Laufflächen 27 erkennbar. Das Profil weist eine Höhe H und eine Breite B auf. Die axiale Länge des Tankkalibrators 21 ist in dieser Ausführungsform größer als die Breite B und die Höhe H.

In Fig. 8 ist zum Vergleich der Außenabmessungen eine an sich bekannt Trockenkalibrierung in Stirnansicht im selben Maßstab dargestellt.

Bei der herkömmlichen Trockenkalibrierung nach Fig. 8 sind die Außenabmessungen deutlich größer als das Profil.

Die Überstände seitlich betragen ca. 60 mm, in der Höhe ca. 40 mm zu den Extrempunkten des Profils. Diese Überstände sind erforderlich, um die Versorgungsbohrungen (in Fig. 8 nicht dargestellt) für den Unterdruck und das Kühlwasser unterbringen zu können, Anbauteile und Zentrierfedern etc. verschrauben und die vertikale Verschraubung durchführen zu können.

Beim Tankkalibrator 11, 12 nach Fig. 6 oder 7 sind deutlich kleinere Außenabmessungen möglich, weil das Innenleben weniger aufwändig gestaltet ist. In der Ausführungsform der Erfindung gemäß der Fig. 7 ist beträgt der seitliche Überstand in der Höhe nur 30 mm. Kleinere Außenabmessungen, d.h. dünnere Wandstärken, fördern die Wärmeabfuhr vom Profil an das umgebende Kühlwasser 25, weil kürzere Distanzen vorliegen.

An der einlaufseitigen Stirnfläche ist im vorliegenden Beispiel der Querschnitt des Tankkalibrators 21 abgesetzt (siehe Fig. 7), um in die Öffnung der Stirnwand des Vakuumtanks 3 (hier nicht dargestellt) zu passen.

Es sind auch Bohrungen für die Kühlkanäle 29 vorhanden, deren Anzahl kann jedoch kleiner sein als bei den Trockenkalibratoren 11, 12, weil weniger Wärme abgeleitet werden muss.

Im konkreten Fall des in Fig. 6 oder 7 dargestellten Tankkalibrators 21, 22, 23, 24 werden die Kühlkanäle 29 etwa mittig mit Kühlwasser beaufschlagt, dieses fließt dann über die beiden Stirnflächen der Tankkalibratoren 21, 22, 23, 24 frei aus und in das Wasserbad 25. Die Anspeisung des Kühlwassers kann dabei entweder seitlich erfolgen, von oben oder von unten, je nach den Platzverhältnissen im Vakuumtank 3.

Hierfür geeignete Bohrungen sind in Fig. 6 dargestellt. Die vertikalen und horizontalen Versorgungsbohrungen 28 schneiden sich und dienen der Verteilung des Kühlwassers. Nicht für Anschlüsse benötigte Bohrungen werden verschlossen.

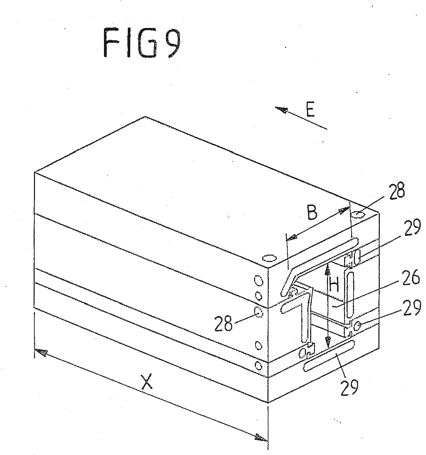

In Fig. 9 wird eine zweite Ausführungsform eines Tankkalibrators 21, 22, 23, 24 dargestellt. Der Tankkalibrator nach Fig. 9 unterscheidet sich von jenem nach Fig. 6 lediglich durch eine andere Ausführung der Wasserversorgung und den fehlenden Absatz. In diesem Fall ist die Kühlwasserversorgung über die Versorgungsbohrungen nicht mittig positioniert, sondern nahe der einlaufseitigen Stirnfläche. Damit nicht der Großteil des Kühlwassers an der nächstgelegenen Stirnfläche ausfließt, sind hier die Längsbohrungen verschlossen.

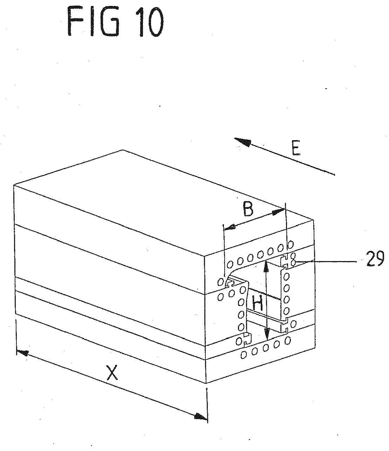

In der dritten Ausführungsform eines Tankkalibrators 21, 22, 23, 24 gemäß Fig. 10 ist keine externe Kühlwasserversorgung vorgesehen. Die Längsbohrungen 29 für Kühlwasser sind jedoch vorhanden. Durch diese kann eine gewisse Menge Wasser fließen, wenn diese axial fluchtend mit Kühlwasser-Auslässen eines benachbarten Tankkalibrators 12 (in Fig. 10 nicht dargestellt) korrespondieren.

Das Kühlwasser, welches zur Beaufschlagung der Tankkalibratoren 21, 22, 23, 24 eingesetzt wird oder das durch eine andere Anschlussstelle in den Vakuumtank 3 eingeleitet wird, muss aus dem Tankraum über eine Absaugöffnung abgesaugt werden. Bevorzugt ist diese Absaugstelle auf Höhe des gewünschten Wasserspiegels in einer Seitenwand des Vakuumtanks 3 positioniert. Besonders vorteilhaft ist es, wenn die Absaugöffnung direkt mit einer Wasserpumpe in Leitungsverbindung steht. Erfahrungsgemäß kommt es häufig zu Fehlfunktionen, wenn diese Wasserpumpe nur kurzzeitig ohne Wasserzufluss betrieben wird. Der Unterdruck im Tank bewirkt dann, dass Luft durch die Wasserpumpe hindurch gegen die normale Strömungsrichtung des Wassers in den Tank eingesaugt wird. In diesem Fall ist ohne spezielle Maßnahmen die Wasserpumpe außerstande, wieder den Pumpbetrieb aufzunehmen.

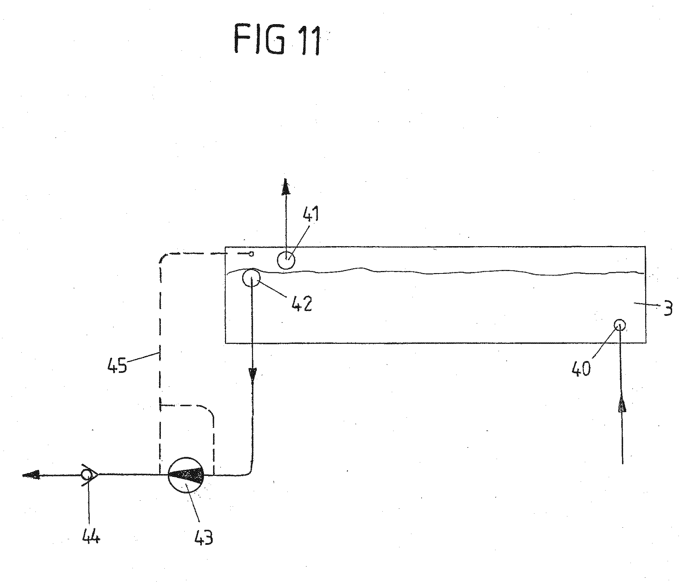

In Fig. 11 ist schematisch der Medienfluss im Vakuumtank 3 dargestellt. Der Vakuumtank 3 wird durch Kühlwasser beaufschlagt, hier dargestellt durch eine Zuflussöffnung 40 am rechten Ende. Eine weitere Öffnung 41, bevorzugt am obersten Rand liegend, dient zum Anschluss an eine Vakuumpumpe. Eindringende Luft sammelt sich im Tankraum oben an und wird daher oben abgesaugt.

Da der Vakuumtank 3 unter Unterdruck steht, kann das zugeführte Kühlwasser nicht ohne weiteres ausfließen. Es ist zweckmäßig, eine Wasserabsaugöffnung 42 auf Höhe des gewünschten Wasserspiegels, vorzusehen und diese über eine Schlauchleitung mit einer Wasserpumpe 43 zu verbinden. Damit wird sichergestellt, dass die Wasserpumpe 43 den Vakuumtank 3 nicht leersaugen kann, so dass keine besondere Regelung für die Wasserstandshöhe erforderlich ist.

Um oben beschriebene Störungen nach kurzzeitigem Leerlauf der Wasserpumpe 43 zu verhindern, wird an der Druckseite der Wasserpumpe 43 ein Rückschlagventil 44 vorgesehen. Ferner wird eine Druckausgleichsleitung 45 zwischen der Druckseite der Wasserpumpe 43 und dem Vakuumtank 3 bzw. der betreffenden Vakuumpumpe vorgesehen.

Die Druckausgleichsleitung 45 bewirkt, dass nach einer Unterbrechung der Wasserförderung eingedrungene Luft aus dem Pumpenraum der Wasserpumpe 43 absaugbar ist, und somit das Kühlwasser in den Pumpenraum zufließen kann, um danach durch die Wasserpumpe 43 weiterbefördert zu werden. Wenn eine Luftblase in die Wasserpumpe 43 eingedrungen ist funktioniert diese nicht einwandfrei.

Alternativ kann die Druckausgleichsleitung 45 auf der Saugseite der Pumpe angeschlossen werden. In diesem Fall fördert die Wasserpumpe im Teillastbetrieb stetig etwas Luft mit. Stärkere Durchsatzschwankungen werden dadurch unterbunden, weil das anstehende Wasser nicht mit vollem Ansaugdruck weiterbefördert werden kann, da sich auf der Saugseite kein höherer Unterdruck ausbilden kann, als durch die Druckausgleichsleitung 45 vorgegeben ist. Das Kühlwasser fließt sozusagen frei bis zur Pumpe. Es kann somit auch kurzzeitig nicht mehr Wasser abgesaugt werden, als frei durch die Leitung zufließen kann. Der Querschnitt der Saugleitung und die statische Höhe des Wasserspiegels bestimmen daher die maximale Absaugleistung der Pumpe dann, wenn die Pumpe für sich eine höhere Durchsatzleistung aufweist.

### Bezugszeichenliste

- 1: Trockenkalibriervorrichtung
- 2: Tankkalibriervorrichtung
- 3: Vakuumtank

- 11, 12: Trockenkalibratoren
- 13: Einlauföffnung des Trockenkalibrators

- 21, 22, 23, 24: Tankkalibratoren
- 25: Wasserbad
- 26: Öffnung Tankkalibrator (für das Profil)
- 27: Lauffläche in Tankkalibrator für Profil
- 28: Versorgungsbohrung
- 29: Kühlkanäle
- 30: Dichtelement (O-Ring)
- 31: Bohrung im Dichtungsbereich
- 32: Dichtelement (Dichtlippe)

- 40: Zuflussöffnung für Kühlwasser
- 41: Öffnung für Vakuumabsaugung
- 42: Wasserabsaugöffnung für Kühlwasser
- 43: Wasserpumpe
- 44: Rückschlagventil
- 45: Druckausgleichsleitung

- 100: Kalibrierungsvorrichtung

- E: Extrusionsrichtung
- X: Länge eines Tankkalibrators
- B: Breite des Profils
- H: Höhe des Profils

## Patentansprüche

1. Kalibriervorrichtung für die Extrusion von Profilen aus Kunststoff mit einer Tankkalibriervorrichtung (2), umfassend mindestens zwei Tankkalibratoren (21, 22, 23, 24) mit einer Öffnung (26) und einer Lauffläche (27) für das extrudierte Profil, die in einem Vakuumtank (3) mit Kühlwasser angeordnet sind und über deren äußere Fläche die Wärme des extrudierten Profils mindestens teilweise zum Kühlwasser übertragbar ist, wobei
- die mindestens zwei Tankkalibratoren (21, 22, 23, 24) mindestens einen Kühlkanal (29) für die Kühlung der Laufflächen (27) aufweisen, wobei der mindestens eine Kühlkanal (29) von Wasser durchströmbar ist, das aus einer Kühlwasserförderung und/oder einem Kühlkanal (29) eines bezogen auf die Extrusionsrichtung stromaufwärts oder stromabwärts liegenden Tankkalibrators (21, 22, 23, 24) stammt,
- der Abstand zwischen den mindestens zwei Tankkalibratoren (21, 22, 23, 24) zwischen 0 und 50 mm beträgt und
- die Tankkalibriervorrichtung (2) mit einer Trockenkalibriervorrichtung (1) mit ein bis vier Trockenkalibratoren (11, 12) gekoppelt ist,
**dadurch gekennzeichnet, dass**
- die axiale Länge (X) der Tankkalibratoren (21, 22, 23, 24) mindestens der Höhe (H) und / oder der Breite (B) des Nennmaßes des Profils entspricht und
- die Wasserstandshöhe im Vakuumtank (3) so einstellbar und/ oder regelbar ist, dass diese das extrudierte Profil überragt.

2. Kalibriervorrichtung nach Anspruch 1, **dadurch**
**gekennzeichnet, dass** der mindestens eine Kühlkanal (29) der mindestens zwei Tankkalibratoren (21, 22, 23, 24) an eine Kühlwasserförderung anschließbar ist oder der mindestens eine Kühlkanal (29) von Kühlwasser passiv durchströmbar ist.

3. Kalibriervorrichtung nach Anspruch 1 oder 2, **dadurch gekennzeichnet, dass** die Tankkalibratoren (21, 22, 23, 24) über Anschlüsse an den Außenseiten mit Kühlwasser beaufschlagbar sind und das Kühlwasser aus den nahe der Lauffläche (27) liegenden Kühlkanälen (29) stirnseitig austritt.

4. Kalibriervorrichtung nach mindestens einem der vorhergehenden Ansprüche, **dadurch gekennzeichnet, dass** der Vakuumtank (3) dichtend ausgeführt ist, um besonders an den dichtenden stirnseitigen Anschlussstellen an den nachfolgenden Vakuumtank (3) und an die davor positionierte Trockenkalibriervorrichtung (1) den Eintritt von Falschluft weitgehend zu unterbinden.

5. Kalibriervorrichtung nach mindestens einem der vorhergehenden Ansprüche, **dadurch gekennzeichnet, dass** der Unterdruck im Vakuumtank (3) zwischen 0,05 bis 0,8 bar, bevorzugt zwischen 0,1 bis 0,5 bar, einstellbar und/oder regelbar ist.

6. Kalibriervorrichtung nach mindestens einem der vorhergehenden Ansprüche, **dadurch gekennzeichnet, dass** am Vakuumtank (3) eine Wasserabsaugöffnung (42) für das Kühlwasser mit einer Wasserpumpe (43) in Leitungsverbindung steht und dass an der Druckseite der Wasserpumpe (43) ein Rückschlagventil (44) angeordnet ist.

7. Kalibriervorrichtung nach Anspruch 6, **dadurch gekennzeichnet, dass** zwischen einem Lufthohlraum des Vakuumtanks (3) und der Wasserpumpe (43) eine Druckausgleichsleitung (45) angeordnet ist, welche vor einem Wassereinlass oder hinter einem Wasserauslass der Wasserpumpe (43) und vor dem Rückschlagventil (44) einmündet.

8. Kalibriervorrichtung nach Anspruch 6 oder 7, **dadurch gekennzeichnet, dass** die Wasserdurchsatzleistung der Wasserpumpe (43) in Abhängigkeit der Wasserstandshöhe im Vakuumtank (3) geregelt wird.

9. Kalibriervorrichtung nach mindestens einem der vorhergehenden Ansprüche, **dadurch gekennzeichnet, dass** der Vakuumtank (3) an einer Längsseite oder an beiden Längsseiten mit einer abnehmbaren Seitenwand ausgerüstet ist.

10. Kalibriervorrichtung nach mindestens einem der vorhergehenden Ansprüche, **dadurch gekennzeichnet, dass** der Abstand zwischen zwei Tankkalibratoren (21, 22, 23, 24) zwischen 0,1 und 5 mm, beträgt.

11. Kalibriervorrichtung nach mindestens einem der vorhergehenden Ansprüche, **dadurch gekennzeichnet, dass** die axiale Länge (X) eines Tankkalibrators (21, 22, 23, 24) mindestens 200 mm, insbesondere 100 mm beträgt.

12. Kalibrierverfahren für ein extrudiertes Profil,
**dadurch gekennzeichnet, dass**
das extrudierte Profil zuerst durch eine Trockenkalibriervorrichtung und durch eine Tankkalibriervorrichtung (2) einer Kalibriervorrichtung gemäß mindestens einem der Ansprüche 1 bis 11 geführt wird.

## Claims

1. Calibration device for the extrusion of profiles from plastic with a tank calibration device (2), comprising at least two tank calibrators (21, 22, 23, 24) which have an opening (26) and have a running surface (27) for the extruded profile and which are arranged in a vacuum tank (3) with cooling water and via the outer surface of which the heat of the extruded profile can be transferred at least partially to the cooling water, wherein
- the at least two tank calibrators (21, 22, 23, 24) have at least one cooling channel (29) for cooling of the running surfaces (27), wherein water can flow through the at least one cooling channel (29), said water coming from a cooling-water conveying means and/or a cooling channel (29) of a tank calibrator (21, 22, 23, 24) situated upstream or downstream in relation to the direction of extrusion,
- the distance between the at least two tank calibrators (21, 22, 23, 24) is between 0 and 50 mm, and
- the tank calibration device (2) is coupled to a dry calibration device (1) which has one to four dry calibrators (11, 12),
**characterized in that**
- the axial length (X) of the tank calibrators (21, 22, 23, 24) corresponds at least to the height (H) and/or the width (B) of the nominal size of the profile, and
- the water level in the vacuum tank (3) can be set and/or regulated so as to be higher than the extruded profile.

2. Calibration device according to Claim 1, **characterized in that** the at least one cooling channel (29) of the at least two tank calibrators (21, 22, 23, 24) can be connected to a cooling-water conveying means, or cooling water can flow through the at least one cooling channel (29) in a passive manner.

3. Calibration device according to Claim 1 or 2, **characterized in that** cooling water can be applied to the tank calibrators (21, 22, 23, 24) via connections at the outer sides, and the cooling water exits the cooling channels (29), situated close to the running surface (27), at a face side.

4. Calibration device according to at least one of the preceding claims, **characterized in that** the vacuum tank (3) is designed to provide sealing action in order to largely prevent entry of infiltration air, particularly at the sealing face-side connection points at the downstream vacuum tank (3) and at the dry calibration device (1) positioned upstream thereof.

5. Calibration device according to at least one of the preceding claims, **characterized in that** the negative pressure in the vacuum tank (3) can be set and/or regulated between 0.05 and 0.8 bar, preferably between 0.1 and 0.5 bar.

6. Calibration device according to at least one of the preceding claims, **characterized in that**, at the vacuum tank (3), a water extraction opening (42) for the cooling water has a line connection to a water pump (43), and **in that** a check valve (44) is arranged on the pressure side of the water pump (43).

7. Calibration device according to Claim 6, **characterized in that**, between an air cavity of the vacuum tank (3) and the water pump (43), there is arranged a pressure equalization line (45) which opens before a water inlet, or after a water outlet, of the water pump (43) and before the check valve (44) .

8. Calibration device according to Claim 6 or 7, **characterized in that** the water throughput of the water pump (43) is regulated in a manner dependent on the water level in the vacuum tank (3).

9. Calibration device according to at least one of the preceding claims, **characterized in that** the vacuum tank (3) is equipped with a removable side wall on one longitudinal side or on both longitudinal sides.

10. Calibration device according to at least one of the preceding claims, **characterized in that** the distance between two tank calibrators (21, 22, 23, 24) is between 0.1 and 5 mm.

11. Calibration device according to at least one of the preceding claims, **characterized in that** the axial length (X) of a tank calibrator (21, 22, 23, 24) is at least 200 mm, in particular 100 mm.

12. Calibration method for an extruded profile, **characterized in that** the extruded profile is guided firstly through a dry calibration device and through a tank calibration device (2) of a calibration device according to at least one of Claims 1 to 11.

## Revendications

1. Dispositif d'étalonnage de l'extrusion de profilés en matière synthétique au moyen d'un dispositif d'étalonnage de réservoir (2), comprenant au moins deux étalonneurs de réservoir (21, 22, 23, 24) qui sont pourvus d'une ouverture (26) et d'une surface de contact (27) destinées au profilé extrudé, qui sont disposés dans un réservoir à vide (3) comportant de l'eau de refroidissement et dont la surface extérieure permet de transférer la chaleur du profilé extrudé au moins partiellement à l'eau de refroidissement,
- les au moins deux étalonneurs de réservoir (21, 22, 23, 24) comportant au moins un conduit de refroidissement (29) destiné à refroidir les surfaces de contact (27), l'au moins un conduit de refroidissement (29) pouvant être traversé par de l'eau qui provient d'une alimentation en eau de refroidissement et/ou d'un conduit de refroidissement (29) d'un étalonneur de réservoir (21, 22, 23, 24) situé en amont ou en aval par rapport au sens d'extrusion,
- la distance entre les au moins deux étalonneurs de réservoir (21, 22, 23, 24) étant comprise entre 0 et 50 mm et
- le dispositif d'étalonnage de réservoir (2) étant accouplé à un dispositif d'étalonnage à sec (1) comportant un à quatre étalonneurs à sec (11, 12),
**caractérisé en ce que**
- la longueur axiale (X) des étalonneurs de réservoir (21, 22, 23, 24) correspond au moins à la hauteur (H) et/ou à la largeur (B) de la dimension nominale du profilé et
- le niveau d'eau dans le réservoir à vide (3) peut être réglé et/ou régulé de manière à dépasser le profilé extrudé.

2. Dispositif d'étalonnage selon la revendication 1, **caractérisé en ce que** l'au moins un conduit de refroidissement (29) des au moins deux étalonneurs de réservoir (21, 22, 23, 24) peut être raccordé à une alimentation en eau de refroidissement ou l'eau de refroidissement peut s'écouler passivement à travers l'au moins un conduit de refroidissement (29).

3. Dispositif d'étalonnage selon la revendication 1 ou 2, **caractérisé en ce que** les étalonneurs de réservoir (21, 22, 23, 24) peuvent être soumis à de l'eau de refroidissement par le biais de raccords sur les côtés extérieur et l'eau de refroidissement sortant des canaux de refroidissement (29), situés près de la surface de contact (27), du côté frontal.

4. Dispositif d'étalonnage selon au moins l'une des revendications précédentes, **caractérisé en ce que** le réservoir à vide (3) est conçu de manière étanche pour empêcher dans une large mesure l'entrée d'air inopportune, notamment au niveau des points de raccordement étanches côtés frontaux au réservoir à vide en aval (3) et au dispositif d'étalonnage à sec (1) positionné en amont.

5. Dispositif d'étalonnage selon au moins l'une des revendications précédentes, **caractérisé en ce que** la dépression dans le réservoir à vide (3) peut être réglée et/ou régulée entre 0,05 et 0,8 bar, de préférence entre 0,1 et 0,5 bar.

6. Dispositif d'étalonnage selon au moins l'une des revendications précédentes, **caractérisé en ce qu'**une ouverture d'aspiration d'eau (42) destinée à l'eau de refroidissement est reliée fluidiquement au réservoir à vide (3) au moyen d'une pompe à eau (43) et **en ce qu'**un clapet anti-retour (44) est disposé du côté sous pression de la pompe à eau (43).

7. Dispositif d'étalonnage selon la revendication 6, **caractérisé en ce qu'**une conduite d'égalisation de pression (45) est disposée entre une cavité d'air du réservoir à vide (3) et la pompe à eau (43) et débouche en amont d'une entrée d'eau ou en aval d'une sortie d'eau de la pompe à eau (43) et en amont du clapet anti-retour (44).

8. Dispositif d'étalonnage selon la revendication 6 ou 7, **caractérisé en ce que** le débit d'eau de la pompe à eau (43) est régulé en fonction du niveau d'eau dans le réservoir à vide (3).

9. Dispositif d'étalonnage selon au moins l'une des revendications précédentes, **caractérisé en ce que** le réservoir à vide (3) est équipé d'une paroi latérale amovible sur un côté longitudinal ou sur les deux côtés longitudinaux.

10. Dispositif d'étalonnage selon au moins l'une des revendications précédentes, **caractérisé en ce que** la distance entre deux étalonneurs de réservoir (21, 22, 23, 24) est comprise entre 0,1 et 5 mm.

11. Dispositif d'étalonnage selon au moins l'une des revendications précédentes, **caractérisé en ce que** la longueur axiale (X) d'un étalonneur de réservoir (21, 22, 23 24) est d'au moins 200 mm, notamment 100 mm.

12. Procédé d'étalonnage d'un profilé extrudé, **caractérisé en ce que**
le profilé extrudé est d'abord guidé à travers un dispositif d'étalonnage à sec et à travers un dispositif d'étalonnage de réservoir (2) d'un dispositif d'étalonnage selon au moins l'une des revendications 1 à 11.
